(19) Europäisches Patentamt

European Patent Office

Office européen des brevets

(11) **EP 4 657 116 A1**

(12) **EUROPEAN PATENT APPLICATION**

(43) Date of publication:
03.12.2025 Bulletin 2025/49

(21) Application number: 24179312.4

(22) Date of filing: 31.05.2024

(51) International Patent Classification (IPC):
**G01S 13/42** (2006.01)   **G01S 13/87** (2006.01)
**G01S 13/931** (2020.01)

(52) Cooperative Patent Classification (CPC):
**G01S 13/931; G01S 13/42; G01S 13/878**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicants:
• **VOLKSWAGEN AG**
**38440 Wolfsburg (DE)**
• **Fraunhofer Gesellschaft zur Förderung der
angewandten Forschung e.V.**
**80688 München (DE)**

(72) Inventors:
• **Kurz, Dr. Heiko Gustav**
**30177 Hannover (DE)**
• **Meinecke, Dr. Marc-Michael**
**38524 Sassenburg (DE)**
• **Simoni, Dr. Renato**
**53111 Bonn (DE)**
• **González-Huici, Dr. María Antonia**
**53123 Bonn (DE)**
• **Greiff, Dr. Christian**
**53179 Bonn (DE)**
• **Gisder, Dr. Thomas**
**38446 Wolfsburg (DE)**
• **Kurtscheid, Dr. Christian Philipp**
**53547 Dattenberg (DE)**

(54) **A METHOD FOR LOCALIZING AT LEAST ONE OBJECT IN SURROUNDINGS OF A MOTOR VEHICLE BY A RADAR SENSOR DEVICE OF THE MOTOR VEHICLE, A COMPUTER PROGRAM PRODUCT, A COMPUTER-READABLE STORAGE MEDIUM, AS WELL AS A RADAR SENSOR DEVICE**

(57)    A method for localizing at least one object (7) in surroundings (8) of a motor vehicle (1) by a radar sensor device (2) of the motor vehicle (1), comprising the steps of: emitting radar radiation signals (9) into the surroundings (8) by a plurality of sending antennas (3) of the radar sensor device (2), wherein the plurality of sending antennas (3) is distributed attached at the motor vehicle (1); capturing radar radiation signals (10), which were reflected by the at least one object (7), by a plurality of receiving antennas (4) of the radar sensor device (2)(, wherein the plurality of receiving antennas (4) is distributed attached at the motor vehicle (1); generating a delay-doppler map (13) for the surroundings (8) depending on the emitted radar radiations signals (9) and the received radar radiation signals (10) by an electronic computing device (5) of the radar sensor device (2); applying a nearfield-beaming algorithm on the generated delay-doppler map (13) by the electronic computing device (5); generating a range-angle map (15) depending on the applied nearfield-beamforming algorithm by the electronic computing device (5); and localizing the at least one object (7) in the range-angle map (15) by the electronic computing device (5). Furthermore, the present invention relates to a computer program product, a computer-readable storage medium, as well as to a radar sensor device (2).

**Fig. 2**

**Description**

The present invention relates to a method for localizing at least one object in surroundings of a motor vehicle by a radar sensor device of the motor vehicle according to pending claim 1. Furthermore, the present invention relates to a corresponding computer program product, a corresponding computer-readable storage medium, as well as to a corresponding radar sensor device.

Traditional automotive radar devices may have small approaches, which limits their resolution capabilities. To achieve submersed degree resolution competitive with other sensor classes, large arrays extending over the cars width are desirable. The signal processing for such large radar arrays needs to address the problem of range migration over approaches, and effect that arises due to the range resolution of the radar being smaller than the approached length, and which prevents straight forward application of range-angle estimation methods.

Additional challenges in processing arise from the usually spars number of antenna elements, which are placed over a curved surface like the windshield. The processing method must further accomplish detection lists which allow for 3D localization, for example range, azimuth, elevation, of targets.

US 2021 / 0124011 A1 provides a radar data acquisition circuit comprising: a radar receiver to receive radar data representing a radar scene in response to a sequence of extended sampling wave form frames that includes multiple sampling wave form sub-frames; and a first processor, configured with stored program instructions to generate one or more replacement sampling wave form sub-frames to include in an extended sampling wave form frame of the sequence based at least in part upon one or more radar parameters of radar data received using the sequence of extended sampling wave form frames.

US 2020 / 0158861 A1 discloses in some examples, a first plurality of independent wave forms that can be generated and converted into a first plurality of independent transmitted radar signals transmitted to a field of view using a transmitter array comprising a first plurality of transmitter antennas. Further, a second plurality of received radar signals to the first plurality of independent transmitter radar signals can be received from the field of view using a receiver array comprising a second plurality of receiver antennas. The second plurality of received radar signals can be combined to form a combined received radar signal and a representation of one or more areas of interest in the field of view can be provided using the combined received radar signal. One or more attributes of the one or more areas of interest can be rendered using the representation of the one or more areas of interest.

US 2020 / 0300965 A1 discloses a distributed radar system, apparatus, architecture, and method for currently combing physically distributed radars to jointly produce target scene information in a current fashion without sharing a common local oscillator reference by configuring a first radar to apply fast and slow time processing steps to target returns generated from a second radar, to compute an estimated frequency of set and an estimated face offset between the first and second radars based on information derived from the fast and slow time processing steps, and to apply the estimated frequency offset and estimated phase of the generated B-static virtual array aperture at the first radar that is current in frequency and face with a monostatic virtual array aperture generated at the second radar, thereby achieving better sensitivity, finer angular resolution, and low false detection rate.

It is an object of the present invention to provide a method, a corresponding computer program product, a corresponding computer-readable storage medium, as well as a corresponding radar sensor device, by which localization of at least one object in surroundings of a motor vehicle can be provided in an improved manner.

This object is solved by a method, a corresponding computer program product, a corresponding computer-readable storage medium, as well as a corresponding radar sensor device according to the independent claims. Advantageous embodiments are presented in the dependent claims.

One aspect of the invention relates to a method for localizing at least one object in surroundings of a motor vehicle by a radar sensor device of the motor vehicle. Radar radiation signals are emitted into the surroundings by a plurality of sending antennas of the radar sensor device, wherein the plurality of sending antennas is distributed attached at the motor vehicle. Radar radiation signals are captured, which were reflected by the at least one object, by a plurality of receiving antennas of the radar sensor device, wherein the plurality of receiving antennas is distributed attached at the motor vehicle. A delay-doppler map is generated for the surroundings depending on the emitted radar radiations signals and the received radar radiation signals by an electronic computing device of the radar sensor device. A nearfield-beaming algorithm is applied on the generated delay-doppler map by the electronic computing device. A range-angle map is generated depending on the applied nearfield-beamforming algorithm by the electronic computing device and the at least one object is localized in the range-angle map by the electronic computing device.

Therefore, a high-resolution localization of objects/targets with a current radar array sensor of a large aperture is provided, in particular integrated into, for example, a windshield of the motor vehicle.

Therefore, a transformation of measured data from a delay-doppler maps into range-angles maps is provided by nearfield beamforming to address the range migration problem. An extraction of location estimates with high dynamic range is provided by fitting model-based contribution for each iterative obtained detection and subtracting them. Therefore, an appropriate modification of, for example a fast-Fourier-transform (FFT) over fast-time in the processing chain that

**EP 4 657 116 A1**

allows for stabile extraction of phases for calibration purposes and reduces the required compute for model evaluation.

This has the advantage, that for example point clouds from automotive radar sensors with very fine azimuth resolution of approximately 0.1 degrees at the broad side, operational sufficiently over a large field of view. This maximizes the signal to noise ratio by recovering all the spread signal energy of arrangements and angles. Depending on the accuracy of antenna position calibration, in theory dynamic ranges beyond nominal sidelobe level of the array can be achieved. Furthermore, this method allows the integration of sensor in the windshield, for example for aerodynamic and aesthetic purposes, and other curved surfaces of the motor vehicle, like a frontal bumper part. This may also reduce the hardware caused from relatively small number of required channels.

In particular, future automotive array sensors might achieve very high angular resolution through large purchase, for example spanning over the width of the motor vehicle's front. As a rule of thumb, MIMO arrays with a physical aperture length of approximately one meter achieve an angular resolution of 0.1 degree. In combination with a desired range resolution of approximately 15 cm, this introduces challenges to automotive radar signal processing that aperture length is a multiple of the size of the range resolution. As a consequence, peaks of the same target are seen and why the different range resolution bins for different combinations of the sending antennas and the receiving antennas (TX and RX), especially for targets far from the arrays broadside.

In particular, for a small array with range resolution not exceeding the array aperture, it would be sufficient to extract one vertical arrange slice of data from a map as input to for example compressive sensing method like OMP to resolve the targets and obtain location estimation. But for large arrays, the signal spread over several range bins prevents a direct application of this standard approach.

Therefore, to overcome the described problems, in a first step a compensation of unwanted terms and an appropriate signal compression in the fast-time and the slow-time domain by means of for example a modified FFT is provided. Then, through near-field beamforming, sidelobe energy is compressed again significantly in the range dimension to avoid the range-migration problem. A detection list may be provided with target locations estimated and are then obtained by finding peaks in the range-angles domain, potentially improving accuracy by means of interpolation and subtracting a fit model to facilitate further detection of weaker targets. If the model for the array manifold is good enough to predict sidelobe structure, for example if a precise estimation of the antenna position is available, even objects/targets of broadly different signal to noise ratio (SNR) beyond the nominal sightlobe level of the array can be extracted.

According to an embodiment for generating the delay-doppler map the radar radiation signals are analyzed by a fast-Fourier-transformation algorithm. In particular, this allows fast-time in the processing chain which allows for stable extraction of phases for calibration purposes and reduces the required compute for model evaluation.

In another embodiment a fast-Fourier-transformation algorithm is used for fast-time signals inside the radar radiation signal and/or for slow-time signals inside the radar radiation signal. The fast-time radiation signals maybe for example so called ADC samples, and the slow-time radiation signals maybe for example so called chirps. A Fourier transform over both fast-time and slow-time then results in particular in the delay-doppler map for each channel width.

According to another embodiment for the slow-time signals a normalized Radon-discrete Fast-Fourier transformation algorithm may be used. In particular, the Fast-Fourier transformation therefore, in particular in the slow-time, can be modified into the Radon DFT, thus processing individual bins for each Doppler value, in particular with appropriate sectioning, to mitigate also the effect of range mitigation over chirps at the expense of higher computational effort.

In another embodiment predefined positions of the sending antennas and/or the receiving antennas are used for generating the range-angle map. In particular, the precise knowledge of the antenna positions or other means to determine the array manifold are used for this step, but is completely general in that it can handle sparse and/or curved array diameters.

According another embodiment a CLEAN-algorithm is applied in the range-angle map for generating a detection list for localizing the object. In particular, a list of detections with localized targets/objects is extracted. Indicating all peaks above an appropriate threshold would be possible, but limits the dynamic range to the nominal sidelobe level of the array. This can be improved with the clean applied to the range-angles map, consisting of the following steps: Focusing on a range trip of interest, find the current strongest peak, maybe after improving accuracy by the interpolation, subtracting the contribution with optimal amplitudes using a model, adding determined parameters to detection list, and repeating until stopping criterion is met, for example a residual energy or latest target amplitude below a threshold is met.

According to another embodiment at least a range of the at least one object and an azimuth of the at least one object is determined for localizing the at least one object. Therefore, the object can be provided with a range to the motor vehicle and with an azimuth to the motor vehicle. In particular, it is a relative range and a relative azimuth respective to the motor vehicle. Therefore, the object/target can be for example provided in a model for presenting the surroundings relative to the motor vehicle. Therefore the object can be for example displayed on a display device relative to the motor vehicle.

In another embodiment additionally an elevation of the at least one object is determined for localizing the at least one object. Therefore, additionally to the at least one range and the azimuth, the object may provide an elevation value. Therefore, a three-dimensional presentation of the object detection can be provided.

According to another embodiment for generating the delay-doppler map channel imbalances and/or delay offsets of the sending antennas and/or receiving antennas are taken into consideration. In particular, the nuisance in terms that can be compensated once that estimates of the channel and imbalances in range offsets have been obtained from a calibration procedure, for example by a method in order to localize the object in an improved manner.

In another embodiment for localizing the at least one object an amplitude of the at least one object in the range-angle map, which is assigned with at least one object is used. Therefore, the object can be localized in the range-map in an improved manner.

In another embodiment a matching pursuit algorithm or an orthogonal matching pursuit algorithm is used for detecting the amplitudes, which are assigned to the at least one object. Therefore, at least two variants are possible for the estimation of the amplitudes. The amplitudes remain unchanged, while the amplitude for the latest detection is calculated from the residual map, as in for example the matching pursuit (MP). Furthermore, amplitudes from all previously detected objects are updated as well, calculated from the original map without subtracted object contributions, as in the orthogonal matching pursuit (OMP).

According to another embodiment the sending antennas and/or the receiving antennas are arranged in a windshield of the motor vehicle. Therefore, a curved aperture, for example in order to improve the aerodynamic and the aesthetic purposes, can be provided comprising the radar sensor device.

In particular, the method is a computer-implemented method. Therefore, another aspect of the invention relates to a computer program product comprising program code means for performing the method according to the preceding aspect.

Furthermore, the present invention relates to a computer-readable storage within comprising at least the computer program product according to the preceding aspect.

Another aspect of the invention relates to a radar sensor device for localizing at least one object in surroundings of a motor vehicle, comprising a plurality of sending antennas, a plurality of receiving antennas, and at least one electronic computing device, wherein the radar sensor device is configured for performing a method according to the preceding aspect. In particular, the method is performed by the radar sensor device.

Furthermore, the present invention relates to a motor vehicle comprising at least the radar sensor device according to the preceding aspect. For example, the radar sensor device can be provided in a bumper of the motor vehicle and/or in a windshield of the motor vehicle.

Advantageous embodiments of the method are to be regarded as advantageous embodiments of the computer program product, the computer-readable storage medium, the radar sensor device, as well as the motor vehicle. The radar sensor device as well as the motor vehicle therefore comprises means for performing the method according to the proceeding aspect.

In the present disclosure, a computing unit/electronic computing device may for example be understood as a data processing device with processing circuitry. A computing unit can therefore perform computing operations in order to process data. The computing operations may also include indexed accesses to a data structure, for example a look-up table, LUT.

In particular, a computing unit may include one or more computers, one or more microcontrollers, and/or one or more integrated circuits, for example, one or more application-specific integrated circuits, ASIC, one or more field-programmable gate arrays, FPGA, and/or one or more systems on a chip, SoC. The computing unit may also include one or more processors, for example one or more microprocessors, one or more central processing units, CPU, one or more graphics processing units, GPU, and/or one or more signal processors, in particular one or more digital signal processors, DSP. The computing unit may also include a physical or a virtual cluster of computers or other of said units.

A computing unit may also comprise one or more hardware and/or software interfaces and/or one or more memory units. Therein, a memory unit may be implemented as a volatile data memory, for example a dynamic random access memory, DRAM, or a static random access memory, SRAM, or as a non-volatile data memory, for example a read-only memory, ROM, a programmable read-only memory, PROM, an erasable programmable read-only memory, EPROM, an electrically erasable programmable read-only memory, EEPROM, a flash memory or flash EEPROM, a ferroelectric random access memory, FRAM, a magnetoresistive random access memory, MRAM, or a phase-change random access memory, PCRAM.

Therefore the figures show:

Fig. 1    a schematic side view according to an embodiment of a motor vehicle comprising an embodiment of a radar sensor device; and

Fig. 2    a schematic flow chart according to an embodiment of the method.

The embodiment examples explained below are preferred embodiments of the invention. In the embodiment examples, the described components each represent individual features of the invention which are to be considered independently of each other, which also further form the invention independently of each other and are thus also to be regarded as part of the invention individually or in a combination other than that shown. Furthermore, the described embodiments can also be supplemented by further features of the invention already described.

In the figures the same elements are comprising the same reference signs.

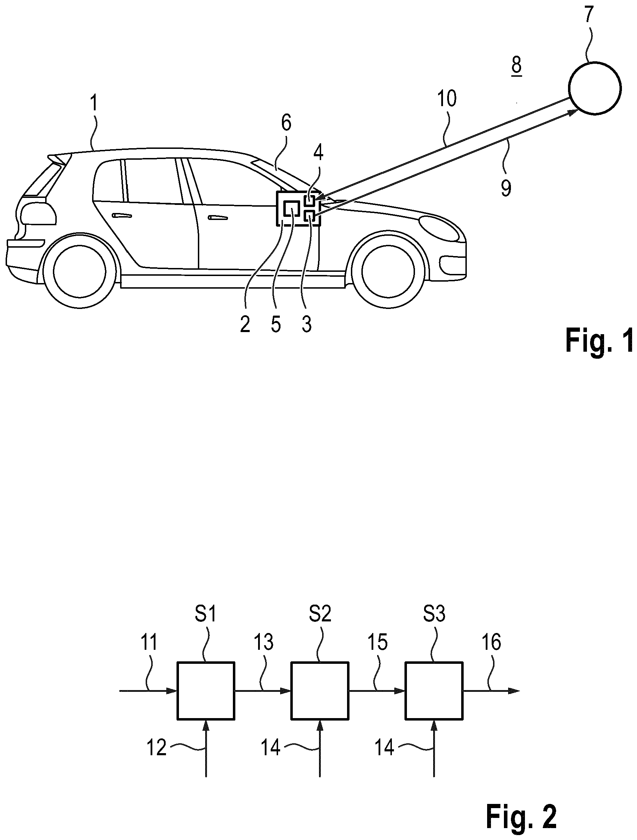

Fig. 1 shows a schematic side view according to an embodiment of a motor vehicle 1. The motor vehicle 1 comprises at least a radar sensor device 2. The radar sensor device 2 comprises at least a plurality of sending antennas 3 and receiving antennas 4. Furthermore, the radar sensor device 2 comprises at least one electronic computing device 5. Furthermore, Fig. 1 shows, that at least the sending antennas 3 and/or the receiving antennas 4 are provided in a windshield 6 of the motor vehicle 1.

Furthermore, Fig. 1 shows an object 7 in surroundings 8 of the motor vehicle 1. The sending antennas 3 are provided for emitting radar radiation signals 9, which can be reflected by the object 7. Reflected radar radiation signals 10 are then back propagated from the object 7 to the receiving elements 4.

Fig. 2 shows a schematic flow chart according to an embodiment of the method. In a first step S1 a two dimensional Fast-Fourier transformation algorithm is provided over fast-time and slow-time signals. Therefore, the first step S1 receives a data cube 11, which is provided with information from the emitted radar radiation signal 9 and the received/captured radar radiation signal 10. Furthermore, a delay offset and channel imbalances 12 are used in the first step S1. After the first step S1 a delay-doppler map 13 is provided for a second step S2. In the second step S2 a near-field beamforming is provided. Therefore, antenna positions 14 are used. After the second step S2 a range-angle map 15 is provided for a third step S3, which is for example a so-called CLEAN-algorithm using also the antenna positions 14. After the third step S3 a detection list 16 is provided, for example to the electronic computing device 5.

Therefore, according to the shown embodiment a method for localizing the at least one object 7 in the surroundings 8 of the motor vehicle 1 by the radar sensor device 2 of the motor vehicle 1 is provided. Radar radiation signals 9 are emitted into the surroundings 8 by the plurality of sending antennas 3 of the radar sensor device 2, wherein the plurality of sending antennas 3 is distributed attached at the motor vehicle 1. Radar radiation signals 10 are captured, which were reflected by the at least one object 7, by a plurality of receiving antennas 4 of the radar sensor device 2, wherein the plurality of receiving antennas 4 is distributed attached at the motor vehicle 1. The delay-doppler map 13 is generated for the surroundings 8 depending on the emitted radar radiation signals 9 and the received radar radiation signals 10 by the electronic computing device 5 of the radar sensor device 2. The nearfield-beaming algorithm is applied on the generated delay-doppler map 13 by the electronic computing device 5. The range-angle map 15 is generated on the applied nearfield-beamforming algorithm by the electronic computing device 5 and the at least one object 7 is localized in the range-angle map 15 by the electronic computing device 5.

In particular, for generating the delay-doppler map 13 the radar radiation signals 9, 10 are analyzed by a fast-Fourier-transformation algorithm. In particular, a fast-Fourier-transformation algorithm is used for fast-time signals inside the radar radiation signals 9, 10 and/or for slow-time signals inside the radar radiation signals 9, 10. Furthermore, for the slow-time signals a normalized Radon-discrete fast-Fourier-transformation algorithm is used.

Furthermore, predefined positions, in particular the antenna positions 14, of the sending antennas 3 and/or the receiving antennas 4 are used for generating the range-angle map 15. Furthermore, the CLEAN-algorithm is applied on the range-angle map 15 for generating the detection list 16 for localizing the object 7. Furthermore, at least a range of the at least one object 7 and/or an azimuth of the at least one object 7 is determined for localizing the at least one object 7. Furthermore, additionally an elevation of the at least one object 7 is determined for localizing the at least one object.

Furthermore, for generating the delay-doppler map 13 channel imbalances and/or delay offset of the sending antennas 3 and/or receiving antennas 4 are taken into consideration.

In another embodiment, for localizing the at least one object 7 an amplitude of the at least one object 7 in the range-angle map 15, which is assigned with the at least one object 7 is used. Furthermore, a matching pursuit algorithm or an orthogonal matching pursuit algorithm is used for detecting the amplitudes, which are assigned to the at least one object 7.

As already mentioned, the sending antennas 3 and/or the receiving antennas 4 maybe arranged in a windshield 6 of the motor vehicle 1.

Now the steps S1 to S3 are described in more detail.

The signal model in the first S1 for the raw data cube 11, based on the mixer output of the FMCW system architecture (i.e., after 'dechirping'), can be derived from a system diagram

$$s_{mix}(t) = \alpha\beta \exp(i2\pi\mu \, \delta \, t) \, s_0 \exp(i2\pi f_b t) \exp\left(i \frac{2\pi}{\lambda} r_b\right) \qquad (1)$$

where

■

$$f_b = \frac{\mu}{c} r_b$$

the beat frequency
- $r_b = \|p - d^{Tx}\| + \|p - d^{Rx}\|$ the bistatic range (or, proportionally, delay)
- $\delta = (l_t - l_r)/c$ the delay offset caused by the difference of (effective) path length to Tx and Rx (cf. green and orange arrows in Figure 4)
- $\gamma = \alpha\beta$ the channel imbalance (complex, i.e. gain & phase)
- $\lambda$ the wavelength of the carrier frequency, $c$ the speed of light
- $\mu$ the chirp rate of the LFM waveform
- $p, d^{Tx}, d^{Rx}$ the target location, Tx position and Rx position, respectively.

Some terms in Eq. (1) are nuisance terms that can be compensated once that estimates of channel imbalances and range offsets have been obtained from a calibration procedure.

A Fourier transform over both fast-time and slow-time then results in the delay-doppler map 13 for each channel with model (for simplicity shown here only for static scenes and zero-Doppler bin)

$$y(r) = s_0 \operatorname{sinc}\left(\frac{r - r_b}{\delta r}\right) \exp\left(i\frac{2\pi}{\lambda} r_b\right) = s_0 \, W(r; p_0) \odot a(p_0) \qquad (2)$$

where

■

$$W(r; p) = \operatorname{sinc}\left(\frac{r - r_b(p)}{\delta r}\right)$$

the delay leakage

■

$$a(p) = \exp\left(i\frac{2\pi}{\lambda} r_b(p)\right) \in \mathbb{C}^{N_v}$$

the (near-field) array model vector

The effect of tapering e.g. with a Hamming window can be accounted for by an appropriate modification of the leakage $W$. As indicated by the absence of a further phase progression term, it was further assumed that a centered FFT is used.

Note that the FFT over slow-time can be modified into a Radon DFT, thus processing individual bins for each Doppler value (with appropriate sectoring), to mitigate also the effect of range migration over chirps at the expense of higher computational effort.

In the second step S2, near-field beamforming is performed to obtain the complex value of the pixel corresponding to (Cartesian) target location p, by means of matching the expected peak bins with the array model vector:

$$z(p) = a(p)^H y\big(r_b(p)\big) \in \mathbb{C}$$

$$= s_0 \, W(r_b(p); p_0)^T \big(a(p)^* \odot a(p_0)\big)$$

Note that precise knowledge of the antenna positions 14 or other means to determine the array manifold are required for this step, but it is completely general in that it can handle sparse and/or curved array geometries.

In practice, sectoring can be used to reduce the amount of compute, meaning that bins to be processed are not chosen individually for each pixel of the range-angle map 15, but only once for an appropriately chosen sector. Furthermore, the data model can be reused especially for larger ranges, where its dependency on range is quite low, thus saving evaluation time and memory.

Now the ambiguity function or point spread function describes spread of signal energy caused by a target at $p_0$ to

the pixel corresponding to location p:

$$\chi(p;p_0) = W(r_b(p);p_0)^T\big(a(p)^* \odot a(p_0)\big) \tag{3}$$

$$= \operatorname{sinc}\left(\frac{r_b - r_{b0}}{\delta r}\right)^T \exp\left(i\frac{2\pi}{\lambda}(r_{b0} - r_b)\right)$$

To obtain a map in the range/angles domain (the angles can be only azimuth as for a linear array, or can be both azimuth and elevation), parametrize the target location hypothesis with polar/spherical coordinates

$$p = p(R,\theta) = R \cdot u_\theta$$

Note that only now a coordinate origin for the range $R$ and direction $u_\theta$ is introduced, whereas the bistatic range (or delay) $r_b$ is invariant. With appropriately chosen origin, most of the ambiguity should be focused now along the angle axis/axes.

In the final third step S3, a list of detections with localized targets/objects 7 is extracted. Indicating all peaks above an appropriate threshold would be possible, but limits the dynamic range to the nominal sidelobe level of the array. This can be improved with the CLEAN-algorithm applied to the range-angle map 15.

Further variants of angle reconstruction algorithms are possible. Another example would be to proceed similarly to the CLEAN-algorithm described above, but subtract the contribution according to model in Eq. (2) from the delay-doppler maps 13, and then recalculating the respective part of the range-angle map 15 for the next iteration. It has the advantage of operating on smaller data sizes as antennas are sparse, while the range-angle map 15 is computed densely. But it comes with the full expense of evaluating the near-field beamforming in each iteration, while the evaluation model in Eq. (3) can potentially be simplified by e.g. use of approximations and the Kronecker multiplication property. Particularly in the case of joint azimuth/elevation estimation, the model evaluation can be speed up considerably by focusing the signal energy subtraction on regions of high sidelobes. For an array that is only slightly curved (e.g. on a windshield), those regions amount to one ridge in elevation and one ridge in azimuth.

Based on the well-known expression

$$\int_{T_0}^{T_0+T} \exp(i2\pi f t)\,dt = T\operatorname{sinc}(Tf)\exp\big(-i\pi f(2T_0 + T)\big)$$

it is seen that the unwanted phase progression disappears when integrating over a centered time interval $T_0 = -\dfrac{T}{2}$. In consequence, application of centered FFT lowers requirements on oversampling and range offset calibration. Removing the phase term also reduces the necessary amount of computation for the evaluation of the model in Eq. (3).

**reference list**

| | |
|---|---|
| 1 | motor vehicle |
| 2 | radar sensor device |
| 3 | sending antenna |
| 4 | receiving antenna |
| 5 | electronic computing device |
| 6 | windshield |
| 7 | object |
| 8 | surroundings |
| 9 | emitted radar radiation signals |
| 10 | reflected radar radiation signals |
| 11 | data cube |
| 12 | delay offsets + channel imbalances |
| 13 | delay-doppler map |
| 14 | antenna positions |

15       range-angle map
16       detection list
S1 to S3     steps of the method

**Claims**

1. A method for localizing at least one object (7) in surroundings (8) of a motor vehicle (1) by a radar sensor device (2) of the motor vehicle (1), comprising the steps of:

   - emitting radar radiation signals (9) into the surroundings (8) by a plurality of sending antennas (3) of the radar sensor device (2), wherein the plurality of sending antennas (3) is distributed attached at the motor vehicle (1);
   - capturing radar radiation signals (10), which were reflected by the at least one object (7), by a plurality of receiving antennas (4) of the radar sensor device (2), wherein the plurality of receiving antennas (4) is distributed attached at the motor vehicle (1);
   - generating a delay-doppler map (13) for the surroundings (8) depending on the emitted radar radiations signals (9) and the received radar radiation signals (10) by an electronic computing device (5) of the radar sensor device (2);
   - applying a nearfield-beaming algorithm on the generated delay-doppler map (13) by the electronic computing device (5);
   - generating a range-angle map (15) depending on the applied nearfield-beamforming algorithm by the electronic computing device (5); and
   - localizing the at least one object (7) in the range-angle map (15) by the electronic computing device (5).

2. A method according to claim 1,
   **characterized in that**
   for generating the delay-doppler map (13) the radar radiation signals (9, 10) are analyzed by a fast-Fourier-transformation algorithm.

3. A method according to claim 2,
   **characterized in that**
   a fast-Fourier-transformation algorithm is used for fast-time signals inside the radar radiation signals (9, 10) and/or for slow-time signals inside the radar radiation signals (9, 10).

4. A method according to claim 3,
   **characterized in that**
   for the slow-time signals a normalized Radon-discrete fast-Fourier transformation algorithm is used.

5. A method according to any one of claims 1 to 4,
   **characterized in that**
   predefined positions of the sending antennas (3) and/or the receiving antennas (4) are used for generating the range-angle map (15).

6. A method according to any one of claims 1 to 5,
   **characterized in that**
   a CLEAN-algorithm is applied on the range-angle map (15) for generating a detection list (16) for localizing the object (7).

7. A method according to any one of claims 1 to 6,
   **characterized in that**
   at least a range of the at least one object (7) and an azimuth of the at least one object (7) is determined for localizing the at least one object (7).

8. A method according to claim 7,
   **characterized in that**
   additionally an elevation of the at least one object (7) is determined for localizing the at least one object (7).

9. A method according to any one of claims 1 to 8,
   **characterized in that**

for generating the delay-doppler map (13) channel imbalances and/or delay offsets (12) of the sending antennas (3) and/or receiving antennas (4) are taken into consideration.

10. A method according to any one of claims 1 to 9,
    **characterized in that**
    for localizing the at least one object (7) an amplitude of the at least one object (7) in the range-angle map (15), which is assigned with the at least one object (7), is used.

11. A method according to claim 10,
    **characterized in that**
    a matching pursuit algorithm or an orthogonal matching pursuit algorithm is used for detecting the amplitudes, which are assigned to the at least one object (7).

12. A method according to any one of claims 1 to 11,
    **characterized in that**
    the sending antennas (3) and/or the receiving antennas (4) are arranged in a windshield (6) of the motor vehicle (1).

13. A computer program product comprising program code means for performing a method according to any one of claims 1 to 12.

14. A computer-readable storage medium comprising at least the computer program product according to claim 13.

15. A radar sensor device (2) for localizing at least one object (7) in surroundings (8) of a motor vehicle (1), comprising a plurality of sending antennas (3), a plurality of receiving antennas (4), and an electronic computing device (5), wherein the radar sensor device (2) is configured for performing a method according to any one of claims 1 to 12.

**Fig. 1**

**Fig. 2**

**EUROPEAN SEARCH REPORT**

**Application Number**

EP 24 17 9312

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2023/341545 A1 (TAPIA DANIEL FLORES [US]) 26 October 2023 (2023-10-26) * paragraphs [0027], [0029] - [0033], [0035], [0037], [0040] - [0043], [0051], [0055]; figures 1-4 * ----- | 1-15 | INV. G01S13/42 G01S13/87 G01S13/931 |
| A | WANG LONGHUI ET AL: "Discrete Radon-Fourier Transform and Its Approximation Algorithm in Short Range Ubiquitous Radar", IEEE SENSORS JOURNAL, IEEE, USA, vol. 21, no. 21, 15 September 2021 (2021-09-15), pages 24409-24421, XP011885675, ISSN: 1530-437X, DOI: 10.1109/JSEN.2021.3113091 [retrieved on 2021-10-28] * introduction * ----- | 4 | |
| A | ZHAO ZIZHUO ET AL: "High-Speed UAV Swarms Detection via Coherent Integration and GTE-Based Super-Resolution Method", IEEE TRANSACTIONS ON AEROSPACE AND ELECTRONIC SYSTEMS, IEEE SERVICE CENTER, PISCATAWAY, NJ, US, vol. 60, no. 2, 30 November 2023 (2023-11-30), pages 1583-1596, XP011966372, ISSN: 0018-9251, DOI: 10.1109/TAES.2023.3338157 [retrieved on 2023-12-01] * introduction, sections C+D * ----- | 6 | **TECHNICAL FIELDS SEARCHED (IPC)** G01S |

-/--

The present search report has been drawn up for all claims

| Place of search | Date of completion of the search | Examiner |
|---|---|---|
| Munich | 22 October 2024 | Metz, Carsten |

EPO FORM 1503 03.82 (P04C01)

page 1 of 2

Europäisches
Patentamt

European
Patent Office

Office européen
des brevets

# EUROPEAN SEARCH REPORT

**Application Number**

EP 24 17 9312

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | MA DINGYOU ET AL: "A DFRC System Based on Multi-Carrier Agile FMCW MIMO Radar for Vehicular Applications", 2020 IEEE INTERNATIONAL CONFERENCE ON COMMUNICATIONS WORKSHOPS (ICC WORKSHOPS), IEEE, 7 June 2020 (2020-06-07), pages 1-7, XP033796262, DOI: 10.1109/ICCWORKSHOPS49005.2020.9145355 [retrieved on 2020-07-20] * para. 12, right column, first para. * ----- | 11 | |
| A | SUN SHUNQIAO ET AL: "MIMO Radar for Advanced Driver-Assistance Systems and Autonomous Driving: Advantages and Challenges", IEEE SIGNAL PROCESSING MAGAZINE, IEEE, USA, vol. 37, no. 4, 29 June 2020 (2020-06-29), pages 98-117, XP011796877, ISSN: 1053-5888, DOI: 10.1109/MSP.2020.2978507 [retrieved on 2020-06-27] * introduction * ----- | 12 | TECHNICAL FIELDS SEARCHED (IPC) |

The present search report has been drawn up for all claims

| Place of search | Date of completion of the search | Examiner |
|---|---|---|
| Munich | 22 October 2024 | Metz, Carsten |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

     

& : member of the same patent family, corresponding document

EPO FORM 1503 03.82 (P04C01)

page 2 of 2

## EP 4 657 116 A1

ANNEX TO THE EUROPEAN SEARCH REPORT
ON EUROPEAN PATENT APPLICATION NO.

EP 24 17 9312

This annex lists the patent family members relating to the patent documents cited in the above-mentioned European search report.
The members are as contained in the European Patent Office EDP file on
The European Patent Office is in no way liable for these particulars which are merely given for the purpose of information.

22-10-2024

| Patent document cited in search report | Publication date | Patent family member(s) | Publication date |
|---|---|---|---|
| US 2023341545 A1 | 26-10-2023 | NONE | |

**EP 4 657 116 A1**

**Patent documents cited in the description**

- US 20210124011 A1
- US 20200158861 A1
- US 20200300965 A1